# FASCICULE DE BREVET EUROPEEN

(11) **EP 2 476 222 B1**
(45) Date de publication et mention de la délivrance du brevet: **29.05.2013**
(21) Numéro de dépôt: 10763770.4
(22) Date de dépôt: 30.08.2010
(51) Int. Cl.: H04L 9/08, H04L 9/12

(54) **Établissement de communication securisée**
Sicherer Verbindungsaufbau
Secure call set-up

(30) Priorité: 09.09.2009 FR 0956132
(43) Date de publication de la demande: 18.07.2012
(73) Titulaire: Alcatel Lucent, 75007 Paris (FR)
(72) Inventeur: FERRERO, Daniel, F-92707 Colombes (FR); PITIOT, Yann, F-92707 Colombes (FR)
(74) Mandataire: Mouney, Jérôme
(86) Numéro de dépôt international: PCT/FR2010/051796
(87) Numéro de publication internationale: WO 2011/030038

(56) Documents cités:
- US-A1- 2004 179 682
- PETER H YU ET AL: "d-key dynamic encryption - A security enhancement protocol for Mobile Ad Hoc Network", UBIQUITOUS AND FUTURE NETWORKS, 2009. ICUFN 2009. FIRST INTERNATIONAL CONFERENCE ON, IEEE, PISCATAWAY, NJ, USA, 7 juin 2009 (2009-06-07), pages 183-188, XP031497079, ISBN: 978-1-4244-4215-7
- MENEZES, VANSTONE, OORSCHOT: "Handbook of Applied Cryptography", 1997, CRC PRESS LLC, USA, XP002587618, page 490 - page 495

## Description

La présente invention concerne un établissement d'appel sécurisé.

Actuellement, il existe des solutions pour sécuriser des communications entre des terminaux de communication, recourant notamment à des serveurs et des algorithmes utilisant des certificats pour établir des communications. Ces solutions sont complexes et requièrent une architecture client serveur coûteuse ainsi que de la bande passante.

Le document US2004/0179682 concerne un procédé et système pour établir une communication sécurisée, qui comprend l'établissement d'une clé dynamique en fonction des informations relatives à une communication précédente, comme la clé précédente.

Un objectif de l'invention est de remédier aux inconvénients précédents en sécurisant de manière simple et efficace une communication entre deux terminaux de communication.

Pour atteindre cet objectif, un procédé pour établir une communication entre un premier terminal de communication et un deuxième terminal de communication à travers un réseau de télécommunications, est caractérisé en ce qu'il comprend les étapes suivantes :
lors d'une demande d'établissement d'appel depuis le premier terminal de communication vers le deuxième terminal de communication, générer dynamiquement une première clé et une deuxième clé à usage unique associées respectivement aux premier et deuxième terminaux de communication en fonction de données temporelles relatives à au moins une précédente communication entre le premier terminal de communication et le deuxième terminal de communication,
comparer les première et deuxième clés générées, et
autoriser l'établissement de la communication si les clés comparées sont identiques.

Avantageusement, l'invention fournit une manière simple de sécuriser une communication, tout en utilisant une architecture de réseau peu complexe et peu coûteuse. La génération dynamique de clés à usage unique nécessite peu d'échanges de messages et offre une sécurisation fiable d'une communication entre les premier et deuxième terminaux de communication.

L'invention concerne également un terminal de communication pour établir une communication entre le terminal de communication et un autre terminal de communication à travers un réseau de télécommunications, caractérisé en ce qu'il comprend :
des moyens pour générer dynamiquement une première clé à usage unique associée au terminal de communication en fonction de données temporelles relatives à au moins une précédente communication entre le terminal de communication et ledit autre terminal de communication, lors d'une demande d'établissement d'appel depuis le terminal de communication vers ledit autre terminal de communication, et
des moyens pour transmettre la clé générée audit autre terminal de communication qui est apte à générer dynamiquement une deuxième clé à usage unique associée à ledit autre terminal de communication en fonction de données temporelles relatives à ladite au moins une précédente communication entre le terminal de communication et ledit autre terminal de communication, à comparer les première et deuxième clés générées, et à autoriser l'établissement de la communication si les clés comparées sont identiques.

L'invention concerne également un terminal de communication pour établir une communication entre le terminal de communication et un autre terminal de communication à travers un réseau de télécommunications, caractérisé en ce qu'il comprend :
des moyens pour recevoir une première clé à usage unique associée à ledit autre terminal de communication générée dynamiquement par ledit autre terminal de communication en fonction de données temporelles relatives à au moins une précédente communication entre le terminal de communication et ledit autre terminal de communication, lors d'une demande d'établissement d'appel depuis ledit autre terminal de communication vers le terminal de communication,
des moyens pour générer dynamiquement une deuxième clé en fonction de données temporelles relatives à ladite au moins une précédente communication entre le terminal de communication et ledit autre terminal de communication,
des moyens pour comparer les première et deuxième clés générées,
des moyens pour autoriser l'établissement de la communication si les clés comparées sont identiques.

L'invention concerne également un serveur pour établir une communication entre un premier terminal de communication et un deuxième terminal de communication à travers un réseau de télécommunications, caractérisé en ce qu'il comprend :
des moyens pour générer dynamiquement une première clé et une deuxième clé à usage unique associées respectivement aux premier et deuxième terminaux de communication en fonction de données temporelles relatives à au moins une précédente communication entre le premier terminal de communication et le deuxième terminal de communication, lors d'une demande d'établissement d'appel depuis le premier terminal de communication vers le deuxième terminal de communication,
des moyens pour comparer les première et deuxième clés générées, et
des moyens pour autoriser l'établissement de la communication si les clés comparées sont identiques.

L'invention se rapporte encore à un programme d'ordinateur apte à être mis en oeuvre dans un serveur, ledit programme comprenant des instructions qui, lorsque le programme est exécuté dans ledit serveur, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication selon une réalisation de l'invention,
- la figure 2 est un algorithme d'un procédé d'établissement de communication sécurisée selon une première réalisation de l'invention, et
- la figure 3 est un algorithme d'un procédé d'établissement de communication sécurisée selon une deuxième réalisation de l'invention.

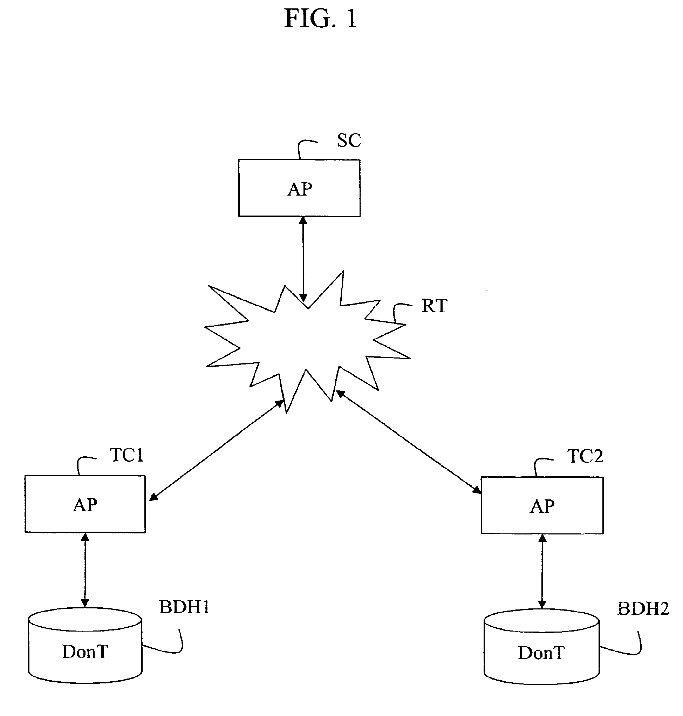

En référence à la figure 1, un système de communication comprend au moins un premier terminal de communication TC1, un deuxième terminal de communication TC2 et au moins un serveur de communication SC, aptes à communiquer entre eux à travers un réseau de télécommunications RT.

Le réseau de télécommunications RT peut être un réseau filaire ou sans fil, ou une combinaison de réseaux filaires et de réseaux sans fil.

Selon un exemple, le réseau de télécommunications RT est un réseau de paquets à haut débit de type IP ("Internet Protocol" en anglais), tel que l'internet ou un intranet.

Selon un autre exemple, le réseau de télécommunications RT est un réseau de type TDM ("Time Division Multiplexing" en anglais) ou encore un réseau privé spécifique à une société supportant un protocole propriétaire.

Les terminaux de communication TC1 et TC2 sont reliés au serveur de communication SC à travers le réseau de télécommunications RT.

Par exemple, le terminal de communication TC1 ou TC2 est un téléphone fixe de type TDM ou un téléphone fixe de type voix sur réseau IP.

Selon un autre exemple, les terminaux de communication TC1 et TC2 sont situés sur des sites différents et reliés respectivement à des serveurs de communication différents.

Par exemple, le serveur de communication SC est un commutateur PABX ("Private Automatic Branch eXchange" en anglais). Le serveur de communication SC comprend des moyens, tels qu'un logiciel ou une combinaison de matériel informatique et de logiciel, configurés pour commander notamment un routage d'appel.

Il est supposé que les terminaux de communication reliés au serveur de communication SC sont synchronisés entre eux, par exemple par l'intermédiaire du serveur de communication ou d'un serveur NTP ("Network Time Protocol" en anglais).

Chaque terminal de communication TC1, TC2 est associé à un identificateur IdT1, IdT2 connu du serveur de communication et des autres terminaux de communication dans le réseau de télécommunications RT.

Chaque terminal de communication est en outre associé à une base de données d'historique, qui peut être incluse dans le terminal de communication ou reliée à ce dernier, ou encore reliée au serveur de communication SC. Ainsi, les premier et deuxième terminaux de communication TC1 et TC2 sont respectivement associés à des première et deuxième bases de données BDH1 et BDH2, qui sont par exemple respectivement reliées aux ou incluses dans les terminaux TC1 et TC2 comme illustré à la figure 1. Dans le cas où la base de données d'historique est externe et reliée au terminal de communication, la base de données est par exemple implémentée dans un dispositif électronique, tel qu'une clé USB.

La base de données d'historique associée au terminal de communication mémorise notamment des informations relatives à des communications établies avec le terminal de communication. Plus particulièrement, les informations contiennent des données temporelles DonT associées à chaque communication établie entre le terminal de communication et un autre terminal de communication, telles que la date et la durée de la communication.

La date et la durée de la communication peuvent avoir différents degrés de précision.

Par exemple, la précision de la date peut être "Année, Mois, Jour, Heure" ou être de manière plus précise "Année, Mois, Jour, Heure, Minute, Seconde". La date peut contenir également une indication du fuseau horaire.

Par ailleurs, les données temporelles peuvent être sous différents formats, par exemple en binaire ou en hexadécimal, dans un ordre donné.

La précision et le format des données temporelles sont par exemple définis par un administrateur système, gérant le serveur de communication.

Par exemple, il est supposé qu'une communication entre le premier terminal de communication TC1 situé en France et le deuxième terminal de communication TC2 situé en Chine a été établie le 30 juin 2009 à 10h51 en France et a duré 5 minutes et 32 secondes.

La première base de données d'historique BDH1 contient des données temporelles DonT par exemple sous le format suivant :
"IdT1 - IdT2
Date : 30/06/2009
Heure : 10h51
Time zone : GMT+1
Durée : 5mn32s"

La deuxième base de données d'historique BDH2 contient des données temporelles DonT par exemple sous le format suivant :
"IdT2 - IdT1
Date : 30/06/2009
Heure : 17h51
Time zone : GMT+8
Durée : 5mn32s"

Selon une réalisation de l'invention, une application AP est implémentée dans au moins l'un des terminaux de communication TC1 et TC2 et/ou dans le serveur de communication SC, ladite application étant dédiée à au moins l'un des terminaux de communication TC1 et TC2.

Par exemple, une application est implémentée seulement dans le serveur de communication SC, ou est implémentée dans chacun des terminaux de communication TC1 et TC2, ou encore est implémentée dans l'un des terminaux de communication TC1 et TC2 et dans le serveur de communication SC. A titre d'exemple, l'application AP est représentée sur la figure 1 dans chacun des terminaux de communication TC1 et TC2 et dans le serveur de communication SC.

Il est supposé qu'une application dédiée à un terminal de communication TC1 ou TC2 est implémentée dans le même dispositif dans lequel est implémentée la base de donnée d'historique associée au terminal de communication. Par exemple, une application et une base de données d'historique sont implémentées dans chaque terminal de communication, ou dans un dispositif relié au terminal de communication, ou bien dans le serveur de communication, ou encore à la fois dans le serveur de communication et dans l'un des terminaux de communication TC1 et TC2. Dans ce dernier cas, une application et la première base de données BDH1 peuvent être implémentées dans le premier terminal de communication TC1 et une autre application et la deuxième base de données BDH2 peuvent être implémentées dans le serveur de communication SC.

L'application a pour fonctionnalité de générer une clé à usage unique associée au terminal de communication en fonction de données temporelles DonT relatives à au moins une communication établie avec le terminal de communication. La clé est générée dynamiquement et de manière unique lors de l'établissement d'une communication avec le terminal de communication. L'application est par exemple implémentée sous forme de programme d'ordinateur

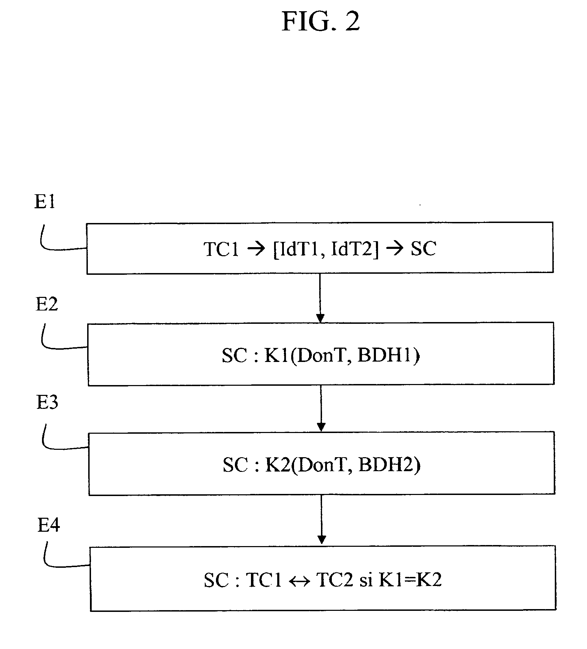

En référence à la figure 2, un procédé pour établir une communication de manière sécurisée selon une première réalisation de l'invention comprend des étapes E1 à E4 exécutées dans le système de communication.

Initialement, il est considéré que plusieurs communications ont déjà été précédemment établies entre les terminaux de communication TC1 et TC2, les communications étant des appels téléphoniques.

Pour chaque communication établie entre les terminaux de communication TC1 et TC2, il est supposé qu'une application dédiée à au moins l'un des terminaux de communication TC1 et TC2 est implémentée dans le serveur de communication SC et mémorise des données temporelles DonT associées à la communication dans des bases de données d'historique, contenant notamment la date et la durée de la communication.

A l'étape E1, l'utilisateur du premier terminal de communication TC1 souhaite appeler l'utilisateur du deuxième terminal de communication TC2 et déclenche une procédure de demande d'établissement d'appel.

Le premier terminal de communication TC1 transmet un message au serveur de communication SC, le message contenant au moins les identificateurs IdT1 et IdT2 des terminaux de communication TC1 et TC2 afin d'établir une communication avec le deuxième terminal de communication TC2.

A l'étape E2, l'application dans le serveur de communication SC détermine des données temporelles DonT relatives à au moins l'une des précédentes communications entre les terminaux de communication TC1 et TC2 dans la première base de données BDH1, à l'aide des identificateurs IdT1 et IdT2 et génère une première clé d'authentification K1 à usage unique en fonction des données temporelles DonT déterminées.

A titre d'exemple, les données temporelles DonT sont relatives à une communication donnée qui a été établie précédemment entre les terminaux de communication TC1 et TC2, ladite communication donnée pouvant être la dernière communication établie. Selon un autre exemple, les données temporelles sont relatives à une combinaison de plusieurs communications données qui ont été établies précédemment entre les terminaux de communication TC1 et TC2.

Par ailleurs, les données temporelles relatives à une communication contiennent notamment la date et la durée de la communication, et optionnellement une indication de fuseau horaire associé au premier terminal de communication TC1. En outre; la précision de la date peut être de différents degrés, tel que "Année, Mois, Jour, Heure" ou être encore "Année, Mois, Jour, Heure, Minute, Seconde".

La première clé d'authentification K1 est ainsi associée à un ensemble de communications précédemment établies entre les terminaux TC1 et TC2, ledit ensemble pouvant être restreint à une seule communication.

A l'étape E3, l'application dans le serveur de communication SC détermine des données temporelles DonT relatives au même ensemble de communications précédemment établies entre les terminaux de communication TC1 et TC2 dans la deuxième base de données BDH2 et génère dynamiquement une deuxième clé d'authentification K2 à usage unique en fonction des données temporelles DonT déterminées.

A l'étape E4, l'application compare les clés K1 et K2, et l'application autorise l'établissement de la communication entre les terminaux de communication TC1 et TC2, si les clés K1 et K2 comparées sont identiques.

Si les clés K1 et K2 ne sont pas identiques, l'application refuse l'établissement de la communication entre les terminaux de communication TC1 et TC2.

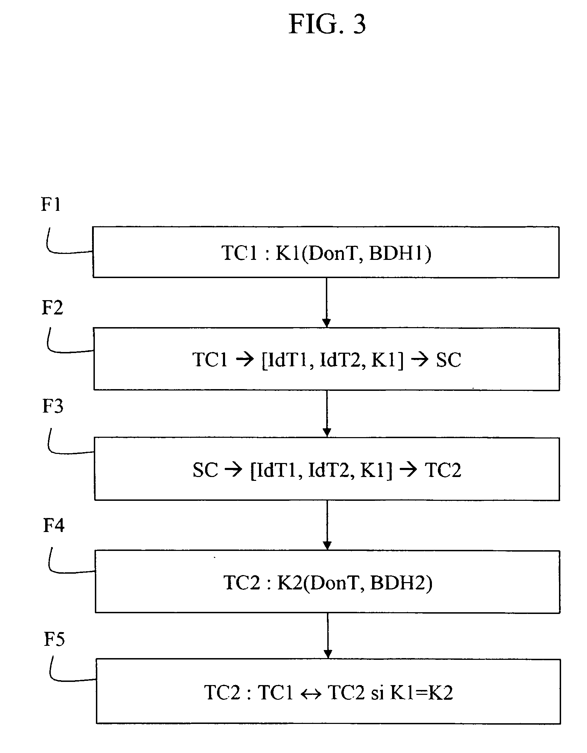

En référence à la figure 3, un procédé pour établir une communication de manière sécurisée selon une deuxième réalisation de l'invention comprend des étapes F1 à F7 exécutées dans le système de communication.

Initialement, il est considéré que plusieurs communications ont déjà été précédemment établies entre les terminaux de communication TC1 et TC2, les communications étant des appels téléphoniques.

Pour chaque communication établie entre les terminaux de communication TC1 et TC2, il est supposé qu'une application et une base de données d'historique sont implémentées dans chaque terminal de communication TC1 et TC2 et mémorise des données temporelles DonT associées à la communication dans la bases de données d'historique, contenant notamment la date et la durée de la communication.

A l'étape F1, l'utilisateur du premier terminal de communication TC1 souhaite appeler l'utilisateur du deuxième terminal de communication TC2 et déclenche une procédure de demande d'établissement d'appel.

L'application dans le premier terminal de communication TC1 détermine des données temporelles DonT relatives à au moins l'une des précédentes communications entre les terminaux de communication TC1 et TC2 dans la première base de données BDH1, à l'aide des identificateurs IdT1 et IdT2 et génère dynamiquement une première clé d'authentification K1 à usage unique en fonction des données temporelles DonT déterminées.

A titre d'exemple, les données temporelles DonT sont relatives à une communication donnée qui a été établie précédemment entre les terminaux de communication TC1 et TC2, ladite communication donnée pouvant être la dernière communication établie. Selon un autre exemple, les données temporelles sont relatives à une combinaison de plusieurs communications données qui ont été établies précédemment entre les terminaux de communication TC1 et TC2.

Par ailleurs, les données temporelles relatives à une communication contiennent notamment la date et la durée de la communication, et optionnellement une indication de fuseau horaire associé au premier terminal de communication TC1. En outre; la précision de la date peut être de différents degrés, tel que "Année, Mois, Jour, Heure" ou être encore "Année, Mois, Jour, Heure, Minute, Seconde".

La première clé d'authentification K1 est ainsi associée à un ensemble de communications précédemment établies entre les terminaux TC1 et TC2, ledit ensemble pouvant être restreint à une seule communication.

A l'étape F2, le premier terminal de communication TC1 transmet un message au serveur de communication SC, le message contenant au moins les identificateurs IdT1 et IdT2 des terminaux de communication TC1 et TC2 et la première clé d'authentification K1 afin d'établir une communication avec le deuxième terminal de communication TC2.

A l'étape F3, le serveur retransmet le message contenant les identificateurs IdT1 et IdT2 et la clé K1 au deuxième terminal de communication TC2.

A l'étape F4, l'application dans le deuxième terminal de communication TC2 détermine des données temporelles DonT relatives au même ensemble de communications précédemment établies entre les terminaux de communication TC1 et TC2 dans la deuxième base de données BDH2 et génère dynamiquement une deuxième clé d'authentification K2 à usage unique en fonction des données temporelles DonT déterminées.

A l'étape F5, l'application dans le deuxième terminal de communication TC2 compare les clés K1 et K2, et l'application autorise l'établissement de la communication entre les terminaux de communication TC1 et TC2, si les clés K1 et K2 comparées sont identiques.

Si les clés K1 et K2 ne sont pas identiques, l'application refuse l'établissement de la communication entre les terminaux de communication TC1 et TC2.

Optionnellement, un administrateur système définit au préalable une clé initiale pour chaque utilisateur qui peut être utilisée pour une première communication entre deux utilisateurs.

Optionnellement, les messages incluant des clés sont chiffrés.

L'invention décrite ici concerne un procédé et un serveur pour établir une communication entre un premier terminal de communication et un deuxième terminal de communication. Selon une implémentation de l'invention, les étapes du procédé de l'invention sont déterminées par les instructions d'un programme d'ordinateur incorporé dans un serveur, tel que le serveur de communication SC. Le programme comporte des instructions de programme, qui lorsque ledit programme est chargé et exécuté dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour établir une communication entre un premier terminal de communication (TC1) et un deuxième terminal de communication (TC2) à travers un réseau de télécommunications (RT), **caractérisé en ce qu'**il comprend les étapes suivantes :
lors d'une demande d'établissement d'appel depuis le premier terminal de communication (TC1) vers le deuxième terminal de communication (TC2), générer (E2, E3; F1) dynamiquement une première clé (K1) et une deuxième clé (K2) à usage unique associées respectivement aux premier et deuxième terminaux de communication en fonction de données temporelles (DonT) relatives à au moins une précédente communication entre le premier terminal de communication (TC1) et le deuxième terminal de communication (TC2),
comparer (E4; F5) les première et deuxième clés générées, et
autoriser (E4; F5) l'établissement de la communication si les clés comparées sont identiques.

2. Procédé conforme à la revendication 1, selon lequel les données temporelles (DonT) contiennent la date et l'heure relatives à au moins une précédente communication entre le premier terminal de communication (TC1) et le deuxième terminal de communication.

3. Procédé conforme à la revendication 1 ou 2, selon lequel les données temporelles (DonT) contiennent en outre une indication de fuseau horaire correspondant au terminal de communication.

4. Procédé conforme à l'une des revendications 1 à 3, selon lequel les données temporelles (DonT) sont relatives à la dernière communication entre le premier terminal de communication (TC1) et le deuxième terminal de communication (TC2).

5. Procédé conforme à l'une des revendications 1 à 3, selon lequel les données temporelles (DonT) sont relatives à une combinaison de précédentes communications entre le premier terminal de communication (TC1) et le deuxième terminal de communication (TC2).

6. Procédé conforme à l'une des revendications 1 à 5, selon lequel les étapes de générer (E2) dynamiquement une première clé (K1) et une deuxième clé (K2), de comparer (E4) les première et deuxième clés générées et d'autoriser (E4) l'établissement de la communication sont exécutées par un serveur (SC) via lequel est établie la communication entre le premier terminal de communication (TC1) et le deuxième terminal de communication (TC2).

7. Procédé conforme à l'une des revendications 1 à 5, selon lequel le premier terminal de communication génère (F1) dynamiquement la première clé (K1) et transmet (F2) cette dernière au deuxième terminal de communication qui génère (F4) la deuxième clé (K2), compare (F5) les première et deuxième clés générées et autorise (F5) l'établissement de la communication si les clés comparées sont identiques.

8. Terminal de communication (TC1) pour établir une communication entre le terminal de communication (TC1) et un autre terminal de communication (TC2) à travers un réseau de télécommunications (RT), **caractérisé en ce qu'**il comprend :
des moyens (AP) pour générer dynamiquement une première clé (K1) à usage unique associée au terminal de communication (TC1) en fonction de données temporelles (DonT) relatives à au moins une précédente communication entre le terminal de communication (TC1) et ledit autre terminal de communication (TC2), lors d'une demande d'établissement d'appel depuis le terminal de communication (TC1) vers ledit autre terminal de communication (TC2), et
des moyens (AP) pour transmettre la clé générée (K1) audit autre terminal de communication (TC2) qui est apte à générer dynamiquement une deuxième clé (K2) à usage unique associée à ledit autre terminal de communication (TC2) en fonction de données temporelles (DonT) relatives à ladite au moins une précédente communication entre le terminal de communication (TC1) et ledit autre terminal de communication (TC2), à comparer les première et deuxième clés générées, et à autoriser l'établissement de la communication si les clés comparées sont identiques.

9. Terminal de communication (TC2) pour établir une communication entre le terminal de communication (TC2) et un autre terminal de communication (TC1) à travers un réseau de télécommunications (RT), **caractérisé en ce qu'**il comprend :
des moyens (AP) pour recevoir une première clé (K1) à usage unique associée à ledit autre terminal de communication (TC1) générée dynamiquement par ledit autre terminal de communication (TC1) en fonction de données temporelles (DonT) relatives à au moins une précédente communication entre le terminal de communication (TC1) et ledit autre terminal de communication (TC2), lors d'une demande d'établissement d'appel depuis ledit autre terminal de communication (TC1) vers le terminal de communication (TC2),
des moyens (AP) pour générer dynamiquement une deuxième clé (K2) en fonction de données temporelles (DonT) relatives à ladite au moins une précédente communication entre le terminal de communication (TC1) et ledit autre terminal de communication (TC2),
des moyens (AP) pour comparer les première et deuxième clés générées,
des moyens (AP) pour autoriser l'établissement de la communication si les clés comparées sont identiques.

10. Serveur (SC) pour établir une communication entre un premier terminal de communication (TC1) et un deuxième terminal de communication (TC2) à travers un réseau de télécommunications (RT), **caractérisé en ce qu'**il comprend :
des moyens (AP) pour générer dynamiquement une première clé (K1) et une deuxième clé (K2) à usage unique associées respectivement aux premier et deuxième terminaux de communication en fonction de données temporelles (DonT) relatives à au moins une précédente communication entre le premier terminal de communication (TC1) et le deuxième terminal de communication (TC2), lors d'une demande d'établissement d'appel depuis le premier terminal de communication (TC1) vers le deuxième terminal de communication (TC2),
des moyens (AP) pour comparer les première et deuxième clés générées, et
des moyens (AP) pour autoriser l'établissement de la communication si les clés comparées sont identiques.

11. Programme d'ordinateur apte à être mis en oeuvre dans un serveur (SC) pour établir une communication entre un premier terminal de communication (TC1) et un deuxième terminal de communication (TC2) à travers un réseau de télécommunications (RT), ledit programme étant **caractérisé en ce qu'**il comprend des instructions qui, lorsque le programme est chargé et exécuté dans ledit serveur, réalisent les étapes suivantes :
lors d'une demande d'établissement d'appel depuis le premier terminal de communication (TC1) vers le deuxième terminal de communication (TC2), générer (E2, E3) dynamiquement une première clé (K1) et une deuxième clé (K2) à usage unique associées respectivement aux premier et deuxième terminaux de communication en fonction de données temporelles (DonT) relatives à au moins une précédente communication entre le premier terminal de communication (TC1) et le deuxième terminal de communication (TC2),
comparer (E4) les première et deuxième clés générées, et
autoriser (E4) l'établissement de la communication si les clés comparées sont identiques.

## Patentansprüche

1. Verfahren zum Aufbau einer Verbindung zwischen einem ersten Kommunikationsendgerät (TC1) und einem zweiten Kommunikationsendgerät (TC2) über ein Telekommunikationsnetzwerk (RT), **dadurch gekennzeichnet, dass** es die folgenden Schritte umfasst :
Bei Anforderung des Aufbaus einer Anrufverbindung von dem ersten Kommunikationsendgerät (TC1) zu dem zweiten Kommunikationsendgerät (TC2), dynamisches Erzeugen (E2, E3; F1) eines ersten Schlüssels (K1) und eines zweiten Schlüssels (K2) zur einmaligen Verwendung, welche in Abhängigkeit von den sich auf mindestens eine vorherige Verbindung zwischen dem ersten Kommunikationsendgerät (TC1) und dem zweiten Kommunikationsendgerät (TC2) beziehenden Zeitdaten (DonT) jeweils dem ersten bzw. dem zweiten Kommunikationsendgerät zugeordnet sind,
Vergleichen (E4; F5) des erzeugten ersten und des erzeugten zweiten Schlüssels, und
Zulassen (E4; F5) des Aufbaus der Verbindung, wenn die verglichenen Schlüssel identisch sind.

2. Verfahren nach Anspruch 1, wobei die Zeitdaten (DonT) das Datum und die Uhrzeit, welche sich auf mindestens eine vorherige Verbindung zwischen dem ersten Kommunikationsendgerät (TC1) und dem zweiten Kommunikationsendgerät beziehen, enthalten.

3. Verfahren nach Anspruch 1 oder 2, wobei die Zeitdaten (DonT) weiterhin eine dem Kommunikationsendgerät entsprechende Zeitzonenangabe enthalten.

4. Verfahren nach einem der Ansprüche 1 bis 3, wobei sich die Zeitdaten (DonT) auf die letzte Verbindung zwischen dem ersten Kommunikationsendgerät (TC1) und dem zweiten Kommunikationsendgerät (TC2) beziehen.

5. Verfahren nach einem der Ansprüche 1 bis 3, wobei sich die Zeitdaten (DonT) auf eine Kombination von vorherigen Verbindungen zwischen dem ersten Kommunikationsendgerät (TC1) und dem zweiten Kommunikationsendgerät (TC2) beziehen.

6. Verfahren nach einem der Ansprüche 1 bis 5, wobei die Schritte des dynamischen Erzeugens (E2) eines ersten Schlüssels (K1) und eines zweiten Schlüssels (K2), des Vergleichens (E4) des erzeugten ersten und des erzeugten zweiten Schlüssels und des Zulassens (E4) des Aufbaus der Verbindung durch einen Server (SC), über welchen die Verbindung zwischen dem ersten Kommunikationsendgerät (TC1) und dem zweiten Kommunikationsendgerät (TC2) aufgebaut wird, durchgeführt werden.

7. Verfahren nach einem der Ansprüche 1 bis 5, wobei das erste Kommunikationsendgerät dynamisch den ersten Schlüssel (K1) erzeugt (F1) und diesen an das zweite Kommunikationsendgerät übermittelt (F2), welches den zweiten Schlüssel (K2) erzeugt (F4), den erzeugten ersten und den erzeugten zweiten Schlüssel vergleicht (F5) und den Aufbau der Verbindung zulässt (F5), wenn die verglichenen Schlüssel identisch sind.

8. Kommunikationsendgerät (TC1) zum Aufbau einer Verbindung zwischen dem Kommunikationsendgerät (TC1) und einem anderen Kommunikationsendgerät (TC2) über ein Telekommunikationsnetzwerk (RT), **dadurch gekennzeichnet, dass** es umfasst:
Mittel (AP) zum dynamischen Erzeugen eines ersten Schlüssels (K1) zur einmaligen Verwendung, welcher in Abhängigkeit von den sich auf mindestens eine vorherige Verbindung zwischen dem Kommunikationsendgerät (TC1) und dem besagten anderen Kommunikationsendgerät (TC2) beziehenden Zeitdaten (DonT) mit dem Kommunikationsendgerät (TC1) assoziiert ist, bei Anforderung des Aufbaus einer Anrufverbindung von dem Kommunikationsendgerät (TC1) zu dem besagten anderen Kommunikationsendgerät (TC2), und
Mittel (AP) zum Übermitteln des erzeugten Schlüssels (K1) an das besagte andere Kommunikationsendgerät (TC2), welches dazu ausgelegt ist, dynamisch einen zweiten Schlüssel (K2) zur einmaligen Verwendung, welcher in Abhängigkeit von den sich auf die besagte mindestens eine vorherige Verbindung zwischen dem Kommunikationsendgerät (TC1) und dem besagten anderen Kommunikationsendgerät (TC2) beziehenden Zeitdaten (DonT) mit dem besagten anderen Kommunikationsendgerät (TC2) assoziiert ist, zu erzeugen und den erzeugten ersten und den erzeugten zweit Schlüssel zu vergleichen, und den Aufbau der Verbindung zuzulassen, wenn die verglichenen Schlüssel identisch sind.

9. Kommunikationsendgerät (TC2) zum Aufbau einer Verbindung zwischen dem Kommunikationsendgerät (TC2) und einem anderen Kommunikationsendgerät (TC1) über ein Telekommunikationsnetzwerk (RT), **dadurch gekennzeichnet, dass** es umfasst:
Mittel (AP) zum Empfangen eines ersten Schlüssels (K1) zur einmaligen Verwendung, welcher mit dem besagten anderen Kommunikationsendgerät (TC1) assoziiert ist und von dem besagten anderen Kommunikationsendgerät (TC1) in Abhängigkeit von den sich auf mindestens eine vorherige Verbindung zwischen dem Kommunikationsendgerät (TC1) und dem besagten anderen Kommunikationsendgerät (TC2) beziehenden Zeitdaten (DonT) dynamisch erzeugt wird, bei Anforderung des Aufbaus einer Anrufverbindung von dem besagten anderen Kommunikationsendgerät (TC1) zu dem Kommunikationsendgerät (TC2),
Mittel (AP) zum dynamischen Erzeugen eines zweiten Schlüssels (K2) in Abhängigkeit von den sich auf die besagte mindestens eine vorherige Verbindung zwischen dem Kommunikationsendgerät (TC1) und dem besagten anderen Kommunikationsgerät (TC2) beziehenden Zeitdaten (DonT),
Mittel (AP) zum Vergleichen des erzeugten ersten und des erzeugten zweiten Schlüssels,
Mittel (AP) zum Zulassen des Aufbaus der Verbindung, wenn die verglichenen Schlüssel identisch sind.

10. Server (SC) zum Aufbau einer Verbindung zwischen einem ersten Kommunikationsendgerät (TC1) und einem zweiten Kommunikationsendgerät (TC2) über ein Telekommunikationsnetzwerk (RT), **dadurch gekennzeichnet, dass** er umfasst:
Mittel (AP) zum dynamischen Erzeugen eines ersten Schlüssels (K1) und eines zweiten Schlüssels (K2) zur einmaligen Verwendung, welche in Abhängigkeit von den sich auf mindestens eine vorherige Verbindung zwischen dem ersten Kommunikationsendgerät (TC1) und dem zweiten Kommunikationsendgerät (TC2) beziehenden Zeitdaten (DonT) jeweils dem ersten bzw. dem zweiten Kommunikationsendgerät zugeordnet sind, bei Anforderung des Aufbaus einer Anrufverbindung von dem ersten Kommunikationsendgerät (TC1) zu dem zweiten Kommunikationsendgerät (TC2),
Mittel (AP) zum Vergleichen des erzeugten ersten und des erzeugten zweiten Schlüssels,
und
Mittel (AP) zum Zulassen des Aufbaus der Verbindung, wenn die verglichenen Schlüssel identisch sind.

11. Computerprogramm zur Ausführung in einem Server (SC), um eine Verbindung zwischen einem ersten Kommunikationsendgerät (TC1) und einem zweiten Kommunikationsendgerät (TC2) über ein Telekommunikationsnetzwerk (RT) aufzubauen, wobei das besagte Programm **dadurch gekennzeichnet ist, dass** es Befehle enthält, welche, wenn das Programm auf dem besagten Server geladen ist und auf diesem ausgeführt wird, die folgenden Schritte durchführen:
Bei Anforderung des Aufbaus einer Anrufverbindung von dem ersten Kommunikationsendgerät (TC1) zu dem zweiten Kommunikationsendgerät (TC2), dynamisches Erzeugen (E2, E3) eines ersten Schlüssels (K1) und eines zweiten Schlüssels (K2) zur einmaligen Verwendung, welche in Abhängigkeit von den sich auf mindestens eine vorherige Verbindung zwischen dem ersten Kommunikationsendgerät (TC1) und dem zweiten Kommunikationsendgerät (TC2) beziehenden Zeitdaten (DonT) jeweils dem ersten bzw. dem zweiten Kommunikationsendgerät zugeordnet sind,
Vergleichen (E4) des erzeugten ersten und des erzeugten zweiten Schlüssels, und
Zulassen (E4) des Aufbaus der Verbindung, wenn die verglichenen Schlüssel identisch sind.

## Claims

1. A method for establishing a communication between a first communication terminal (TC1) and a second communication terminal (TC2) over a telecommunications network (RT), **characterized in that** it comprises the following steps:
during a request to establish a call from the first communication terminal (TC1) to the second communication terminal (TC2), dynamically generating (E2, E3; F1) a first single-use key (K1) and a second single-use key (K2) respectively associated with the first and second communication terminals as a function of time data (DonT) related to at least one previous communication between the first communication terminal (TC1) and the second communication terminal (TC2),
comparing (E4; F5) the generated first and second keys, and
authorizing (E4; F5) the establishment of the communication if the compared keys are identical.

2. A method according to claim 1, according to which the time data (DonT) contains the date and time related to at least one previous communication between the first communication terminal (TC1) and the second communication terminal.

3. A method according to claim 1 or 2, according to which the time data (DonT) furthermore contains an indication of the time zone that corresponds to the communication terminal.

4. A method according to one of the claims 1 to 3, according to which the time data (DonT) relates to the last communication between the first communication terminal (TC1) and the second communication terminal (TC2).

5. A method according to one of the claims 1 to 3, according to which the time data (DonT) relates to a combination of previous communications between the first communication terminal (TC1) and the second communication terminal (TC2),

6. A method according to one of the claims 1 to 5, according to which the steps of dynamically generating (E2) a first key (K1) and a second key (K2), of comparing (E4) the first and second generated keys, and of authorizing (E4) the establishment of the communication are executed by a server (SC) via which is established the communication between the first communication terminal (TC1) and the second communication (TC2).

7. A method according to one of the claims 1 to 5, according to which the first communication terminal dynamically generates (F1) the first key (K1) and transmits (F2) that key to the second communication terminal, which generates (F4) the second key (K2), compare (F5) the generated first and second keys, and authorizes (F5) the establishment of the communication if the compared keys are identical.

8. A communication terminal (TC1) for establishing a communication between the communication terminal (TC1) and another communication terminal (TC2) over a telecommunications network (RT), **characterized in that** it comprises:
means (AP) for dynamically generating (E2) a single-use key (K1) associated with the communication terminal (TC1) as a function of time data (DonT) related to at least one previous communication between the communication terminal (TC1) and said other communication terminal (TC2), during a request to establish a call from the communication terminal (TC1) to said other communication terminal (TC2), and
means (AP) for transmitting the generated key (K1) to said other communication terminal (TC2), which is capable of dynamically generating a second single-use key (K2) associated with said other communication terminal (TC2) as a function of time data (DonT) related to said at least one previous communication between the communication terminal (TC1) and said other communication terminal (TC2), of comparing the generated first and second keys, and of authorising the establishment of the communication if the compared keys are identical.

9. A communication terminal (TC2) for establishing a communication between the communication terminal (TC2) and another communication terminal (TC1) over a telecommunications network (RT), **characterized in that** it comprises:
means (AP) for receiving a single-use key (K1) means (AP) for receiving a first single-use key (K1) associated with said other communication terminal (TC1) dynamically generated by said other communication terminal (TC1) as a function of time data (DonT) related to at least one previous communication between the communication terminal (TC1) and said other communication terminal (TC2), during a request to establish a call from said other communication terminal (TC1) to the communication terminal (TC2),
means (AP) for dynamically generating a second key (K2) as a function of time data (DonT) related to at least one previous communication between the communication terminal (TC1) and said other communication terminal (TC2).
means (AP) for comparing the generated first and second keys,
means (AP) for authorizing the establishment of the communication if the compared keys are identical.

10. A server (SC) for establishing a communication between a first communication terminal (TC1) and a second communication terminal (TC2) over a telecommunications network (RT), **characterized in that** it comprises:
means (AP) for dynamically generating a first single-use key (K1) and a single-use second key (K2) respectively associated with a the first and second communication as a function of time data (DonT) related to at least one previous communication between the first communication terminal (TC1) and the second communication terminal (TC2) during a request to establish a call from the first communication terminal (TC1) to the second communication terminal (TC2).
means (AP) for comparing the generated first and second keys,
and
means (AP) for authorizing the establishment of the communication if the compared keys are identical.

11. A computer program capable of being implemented within a server (SC) in order to establish a communication between a first communication terminal (TC1) and a second communication terminal (TC2) over a telecommunications network (RT), said program being **characterized in that** it comprises instructions which, when the program is loaded and executed within said server, perform the following steps:
during a request to establish a call from the first communication terminal (TC1) to the second communication terminal (TC2), dynamically generating (E2, E3) a first single-use key (K1) and a second single-use key (K2) respectively associated with the first and second communication terminals as a function of time data (DonT) related to at least one previous communication between the first communication terminal (TC1) and the second communication terminal (TC2),
comparing (E4) the generated first and second keys, and
authorizing (E4) the establishment of the communication if the compared keys are identical.
